# EUROPÄISCHE PATENTSCHRIFT

(11) **EP 0 423 073 B1**
(45) Veröffentlichungstag und Bekanntmachung des Hinweises auf die Patenterteilung: **15.03.1995**
(21) Anmeldenummer: 90810765.9
(22) Anmeldetag: 05.10.1990
(51) Int. Cl.: B29C 53/04, E04C 2/32, B32B 35/00

(54) **Biegen einer ebenen Verbundplatte**
Method for bending a flat laminate
Procédé pour courber un stratifié plat

(30) Priorität: 13.10.1989 CH 3748/89
(43) Veröffentlichungstag der Anmeldung: 17.04.1991
(73) Patentinhaber: ALUSUISSE-LONZA SERVICES AG, 8034 Zürich (CH)
(72) Erfinder: Ehrat, Rainer, CH-8207 Schaffhausen (CH); Schlatter, Reinhard, CH-8200 Schaffhausen (CH)

(56) Entgegenhaltungen:
- DE-A- 2 049 304
- FR-A- 2 370 562

## Beschreibung

Die Erfindung bezieht sich auf ein Verfahren zum Biegen einer ebenen Verbundplatte mit einem elasto-plastisch verformbaren Kern und wenigstens einer einseitig angeordneten Deckschicht aus einem plastisch oder thermoplastisch verformbaren Material. Weiter bezieht sich die Erfindung auf eine Vorrichtung zur Durchführung des Verfahrens.

Zur Herstellung von gebogenen bzw. gewölbten Verbundplatten mit einem Schaumkern aus Kunststoff werden heute aufwendige Klebeverfahren mit teuren Positiv- und Negativformen eingesetzt. Trotz der hohen Fertigungskosten ist die Formgebung quantitativ und qualitativ beschränkt:
- Da für jede Form spezielle Lehren hergestellt werden müssen, ist die Formenvielfalt stark eingeschränkt.
- Für das übliche Biegen von Verbundplatten wird bei kleinerem Biegeradius auf der Innenseite wenigstens eine keilförmige Nut ausgespart, welche während des Biegens wieder geschlossen wird. Nach diesem Verfahren kann die innere Deckschicht ihre Dampfsperrfunktion nicht mehr erfüllen.

Der vorliegenden Erfindung liegt die Aufgabe zugrunde, ein Verfahren und eine Vorrichtung der eingangs genannten Art zu schaffen, welche mit geringen Werkzeugkosten und kurzem Zeitaufwand erlauben, ebene Verbundplatten nachträglich mit praktisch beliebigen Radien zu verformen, ohne die Verbundsteifigkeit wesentlich zu vermindern oder die Dampfdichtheit zu beeinträchtigen.

In bezug auf das Verfahren wird die Aufgabe erfindungsgemäss dadurch gelöst, dass wenigstens eine Deckschicht und das darunterliegende Kernmaterial der Verbundplatte auf der Biegungsinnenseite schrittweise geradlinig eingekerbt werden.

Durch geometrisch definiertes Einkerben einer oder beider Deckschichten wird erfindungsgemäss über den gesamten oder einen bestimmten Bereich die Länge eines Deckblechs der Verbundplatte reduziert. Bei der plastischen Verformung wird darauf geachtet, dass keine Schubüberbeanspruchung des Kern-Deckschicht-Verbundes entsteht. Die Verkürzung einer Deckschicht mindestens über einen bestimmten Bereich bewirkt, das die Verbundplatte entsprechend gebogen bzw. gewölbt oder gekrümmt wird, wobei die eingekerbte Deckschicht die konkav gewölbte Innenseite bildet.

Die Einkerbungen erstrecken sich zweckmässig jeweils über die ganze Breite einer Deckschicht, wobei die Breite nicht rein geometrisch zu betrachten ist, Einkerbungen können sich auch über die ganze Länge einer Verbundplatte erstrecken.

Verbundplatten an sich bekannter Bauart mit einem elasto-plastisch verformbaren Kern aus einem thermo- oder duroplastischen Kunststoff müssen trotz ihrer elasto-plastischen Verformbarkeit auch nach dem Biegen die Anforderungen an die mechanische Steifigkeit erfüllen. Dazu eignen sich beispielsweise Schäume aus Polyvinylchlorid, Styropor, Polystyrol, Polyurethan oder Polymethacrylat.

Je nach dem Verwendungszweck kann der Kern geschlossenporig oder offenporig ausgebildet sein, feuerhemmende Zusätze, z.B. Aluminiumtrihydroxid, und/oder mechanisch verstärkende Fasern, z.B. Glas- oder Kohlenstoffasern, in dem Fachmann bekannter Konzentration enthalten.

Die Dicke des Schaumkerns liegt vorzugsweise im Bereich von 20 - 30 mm. Wesentlich dickere Kerne setzen der mit dem erfindungsgemässen Verfahren erzeugten Biegekraft einen hohen Widerstand entgegen bzw. ergeben nur geringe Plattenkrümmungen mit grossen Radien, was zu Schubüberbeanspruchungen des Kern-Deckschicht-Verbundes führen könnte. Wesentlich weniger als 20 mm dicke Kernschichten können dem Verbund kaum mehr eine meist erforderliche minimale Steifigkeit verleihen.

Die Deckschicht/en besteht/bestehen bevorzugt aus einem plastisch gut verformbaren Metall und/oder einem thermoplastischen Kunststoff. Die Dicke der Deckschicht/en liegt, material- und/oder verwendungsbedingt, vorzugsweise im Bereich von 0,1 - 1,5 mm. Metallische Deckschichten bestehen insbesondere aus Aluminium, einer Aluminiumlegierung, Edelstahl oder Kupfer, thermoplastische Deckschichten aus einem Hartkunststoff, wie z.B. Polyäthylen oder Polypropylen.

Der Verbund erfolgt mittels eines Klebstoffs oder beim Herstellungsverfahren eingeleiteter Klebefolien.

Die Einkerbungen werden vorzugsweise mit einer Tiefe von höchstens 40%, insbesondere 5 - 20%, der Dicke der Verbundplatte erzeugt, sie liegen meist im Bereich von etwa 1 - 10 mm. Die mögliche Einkerbungstiefe ist in erster Linie von der elasto-plastischen Verformbarkeit des Kerns aus Kunststoffschaum, allenfalls mit den erwähnten Zusätzen, abhängig.

Durch Variation des Abstands der Einkerbungen, deren Tiefe, deren gegenseitigem Winkel und/oder deren Querschnittsform kann praktisch jede Biegung der Verbundplatte, in der einen oder andern Richtung, erreicht werden. In bezug auf den Biegeradius ist die Grenze nach unten durch die Steifigkeit bzw. Elasto-Plastizität des Kernmaterials gesetzt. Die elasto-plastische Verformbarkeit von Kern und Deckschicht/en kann in einem Ausmass ausgenützt werden, das bisher nicht für möglich gehalten wurde.

Je nach der regelmässigen oder unregelmässigen Anwendung von einem oder mehreren Parametern entstehen geometrisch regelmässige oder unregelmässige Biegungsflächen. Die Verbundsteifigkeit wird nicht wesentlich beeinträchtigt, die Dampfdichtheit der plastisch verformten Deckschicht bleibt voll erhalten.

Bezüglich der Vorrichtung zur Durchführung des Verfahrens wird die Aufgabe erfindungsgemäss dadurch gelöst, dass die Vorrichtung aus einem Gerüst mit einer maschinell angetriebenen Prägewalze oder aus einer Presse mit einem balken- oder blattförmigen, auswechselbaren Presswerkzeug besteht, welches manuell oder maschinell, programmiert gesteuert, betätigbar ist.

Der variierbare Pressdruck wird in bekannter Weise pneumatisch, hydraulisch oder elektromechanisch erzeugt.

Das auswechselbare Presswerkzeug weist in Richtung der Verbundplatte einen geraden, unten abgerundeten Kamm auf, welcher die Einkerbungen erzeugt. Jedes der verschiedenen Presswerkzeuge weist unten einen charakteristischen, den Kamm bildenden Biegeradius auf. Vorzugsweise werden Presswerkzeuge mit kleineren Biegeradien eingesetzt, welche etwa im Bereich von 1 - 2 mm liegen.

Nach besonderen Ausführungsformen der Erfindung ist die Prägewalze beheizbar oder das Presswerkzeug als Heizschwert ausgebildet. Dies ist insbesondere bei der Bearbeitung einer Deckschicht aus einem thermoplastischen Kunststoff vorteilhaft.

Eine Prägewalze ist wenigstens in bezug auf die Höhe und die Neigung der Achse verstellbar.

Eine automatisierte Presse ist in bezug auf wenigstens einen der folgenden Parameter einstellbar:
- Presskraft, weiche dem Material und der Dicke der Deckschicht, dem Biegeradius des Presswerkzeugkamms und der Länge der zu erzeugenden Einkerbung angepasst ist.
- Vorschub der Verbundplatte, welcher den Abstand der Einkerbungen bestimmt.
- Horizontaler Winkel des Presswerkzeugs, welcher den Winkel der Einkerbung in bezug auf die Längsrichtung der Verbundplatte bestimmt.
- Vertikal er Winkel des Presswerkzeugs, welcher bestimmt, ob die erzeugte Einkerbung gleichmässig oder unterschiedlich tief ist.
- Hub des Presswerkzeugs, welcher die Tiefe der Einkerbung bestimmt.

Als Presse zur Ereugung von Einkerbungen ist beispielsweise eine Abkantpresse geeignet.

Die mit dem erfindungsgemässen Verfahren hergestellten gebogenen bzw. gewölbten Verbundplatten haben einen breiten Verwendungsbereich, insbesondere in der Architektur oder im Fahrzeugbau. Im Hochbau können Kalt- oder dekorative Fassaden einer grossen Formenvielfalt hergestellt werden, die Innenausstattung kann massgebend geprägt oder Möbel können hergestellt werden. Im Bereich des Tiefbaus liegt eine wesentliche Verwendung im Tunnelbau, wo eine alle Sicherheitsanforderungen erfüllende, ästhetisch ansprechende Innenauskleidung hergestellt werden kann. Im Fahrzeugbau liegen wesentliche Verwendungen im Bereich der Dachgestaltung, von Fahrzeughüllen und Containern.

Die Erfindung wird anhand von in der Zeichnung dargestellten Ausführungsbeispielen, welche auch Gegenstand von abhängigen Ansprüchen sind, näher erläutert. Es zeigen schematisch:
- Fig. 1 einen Teilschnitt durch eine ebene Verbundplatte,
- Fig. 2 die Verbundplatte nach Fig. 1 bei der ersten Einkerbung,
- Fig. 3 die Verbundplatte gemäss Fig. 1 bei einer späteren Einkerbung,
- Fig. 4 einen Teilschnitt durch die gebogene Verbundplatte,
- Fig. 5 einen Teilschnitt durch eine Verbundplatte beim Einkerben, und
- Fig. 6 bis 9 eine Ansicht von Verbundplatten mit verschieden angeordneten Einkerbungen.

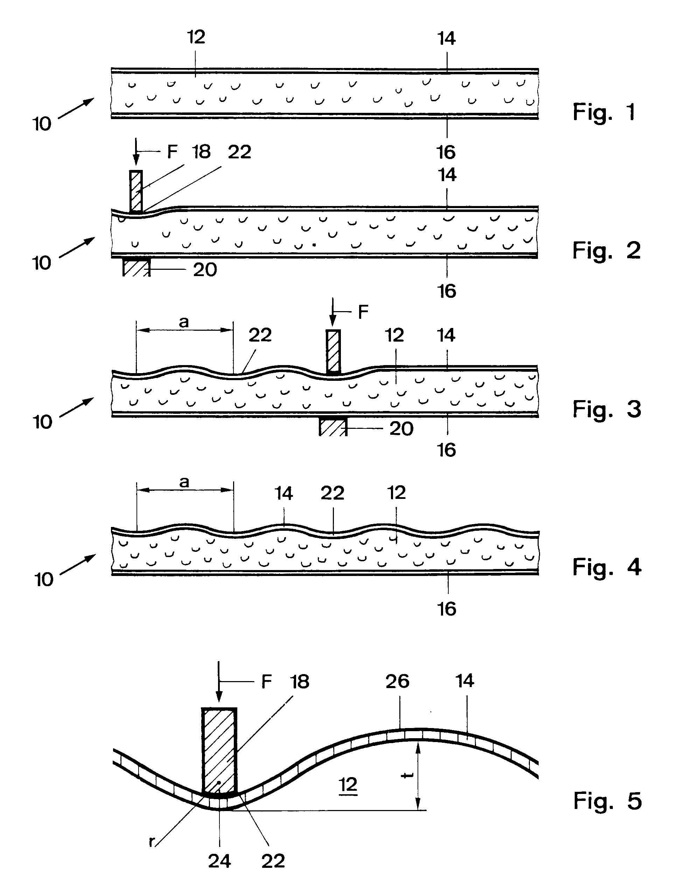

Die in Fig. 1 dargestellte Verbundplatte 10 von üblicher Bauart hat einen Kern 12 aus einem thermoplastischen Kunststoff-Hartschaum und beidseitig angeordnete, etwa 0,9 mm dicke Deckschichten 14, 16 aus einer duktilen Aluminiumlegierung. Die Verbundplatte 10 ist beidseits völlig eben ausgebildet.

Fig. 2 zeigt die von einer nicht dargestellten Presse ausgeübte Kraft F, welche das sich über die ganze Breite der Verbundplatte 10 erstreckende Presswerkzeug 18 gegen die obere Deckschicht 14 stösst. Eine unterhalb des Presswerkzeugs angeordnete Auflage 20 verhindert ein Durchbiegen der Verbundplatte 10.

Der automatisch einstellbare Hub der Presse ist derart begrenzt, dass das Presswerkzeug 18 nur wenig in die Verbundplatte gedrückt wird.

Das Einkerben der Verbundplatte 10 wird nach jedem Vorschub wiederholt.

In Fig. 3 ist die Herstellung der vierten Einkerbung dargestellt. In Wirklichkeit wären jedoch das Presswerkzeug 18 und die Auflage 20 noch am selben Ort wie in Fig. 2, die Verbundplatte 10 dagegen wäre automatisch um drei Takte vorgeschoben. Die Einkerbungen 22 haben einen Abstand a, entsprechend einem Taktvorschub.

Die Einkerbungen 22 bewirken, dass die Verbundplatte 10 in deren Bereich bereits nach oben abgebogen ist. Da die Einkerbungen nur eine geringe Tiefe aufweisen und deren Abstände a verhältnissmässig gross sind, hat die Verbundplatte 10 einen sehr grossen Biegeradius. Der nicht eingekerbte Teil der Verbundplatte 10 ist beidseitig noch völlig eben.

In Fig. 4 ist die fertige, leicht gebogene Verbundplatte 10 dargestellt. Der Krümmungsradius ist, wie bereits erwähnt sehr gross und beispielsweise für Tunnelgewölbe geeignet.

Fig. 4 lässt auch erkennen, dass beide Deckschichten 14, 16 völlig intakt bleiben und daher die Verbundplatte 10 beidseits dampfdicht ist.

Nach einer Variante könnte die gebogene Verbundplatte 10 mit einer Prägewalze hergestellt werden, wobei die Prägekämme einen Abstand a hätten und im wesentlichen einem Presswerkzeug 18 entsprechen würden.

In Fig. 5 ist das Einkerben mittels eines Presswerkzeugs 18, stark überhöht gezeichnet, detaillierter dargestellt. Der Biegeradius r des Kamms 24 des Presswerkzeugs 18 hat einen Abrundungsradius r von etwa 1 mm. Die Einkerbung 22 in der Deckschicht 14 wirkt deshalb, makroskopisch betrachtet, wie eine Linie, während die unverformt bleibenden Buckel 26 verhältnismässig flach sind. Durch Auswechseln des Presswerkzeugs 18 mit einem andern Abrungungsradius r des Kamms 24 können diese Verhältnisse verändert werden.

Die Tiefe t der Einkerbung 22 ist verhältnismässig gering, sie ist im wesentlichen beschränkt durch die elasto-plastischen Eigenschaften des Kerns 12.

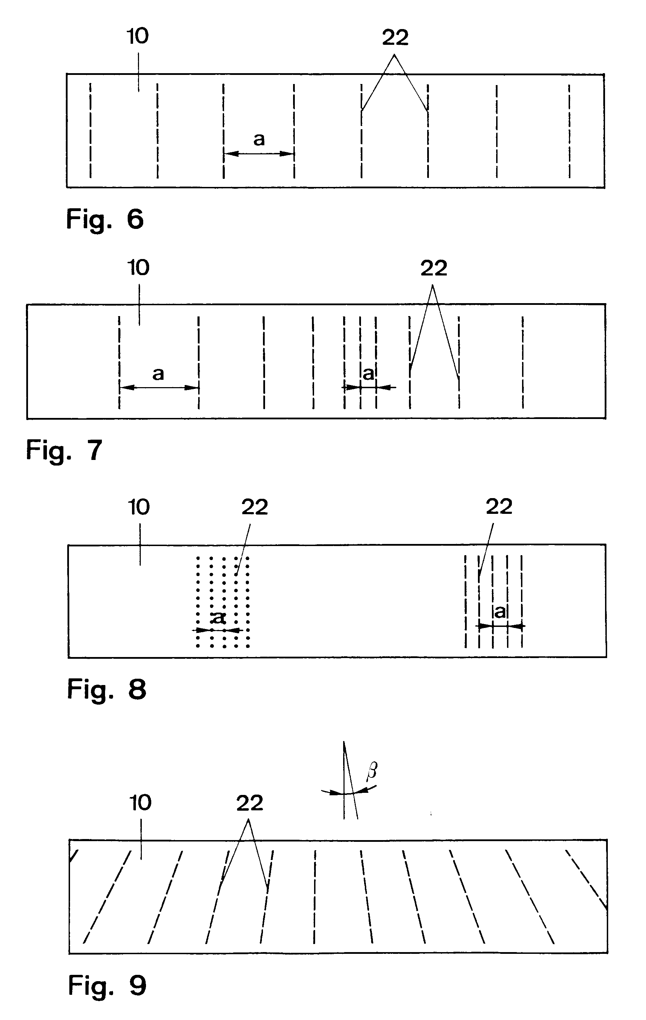

Die in Fig. 6 dargestellte Verbundplatte 10 weist in regelmässigen Abständen a gestrichelt dargestellte Einkerbungen 22 auf. Diese Einkerbungen sind vom selben Presswerkzeug gleich tief eingedrückt worden. Die parallel verlaufenden Einkerbungen erstrecken sich über die ganze Breite der Verbundplatte 10. Aus Fig. 6 resultiert eine mit regelmässigem Biegeradius gekrümmte Verbundplatte 10, wie sie im Prinzip in Fig. 4 dargestellt ist.

Nach einer nicht sichtbaren Variante von Fig. 6 sind die Einkerbungen 22 im mittleren Bereich tiefer ausgebildet. In diesem Fall resultiert eine im erwähnten mittleren Bereich stärkere Biegung der Verbundplatte 10 als aussen.

Nach Fig. 7 haben die Einkerbungen 22 im mittleren Bereich einen kleineren Abstand a als im äusseren. Daraus resultiert eine Verbundplatte 10, die im mittleren Bereich stärker gebogen ist als aussen. Dieser Unterschied in bezug auf die Biegung kann noch verstärkt werden, indem die Einkerbungen 22 im mittleren Bereich tiefer ausgebildet sind.

Werden die Einkerbungen 22 gemäss Fig. 7 alternierend auf der oberen und der unteren Deckschicht angebracht, entsteht eine wellenförmig gebogene Verbundplatte 10. Die Einkerbungen 22 auf der oberen und der unteren Deckschicht der Verbundplatte 10 dürfen nicht überlappen, d.h. sie müssen in Längsrichtung versetzt sein, weil sich sonst die Effekte aufheben und die Gefahr einer Schubüberbeanspruchung stark erhöht ist.

Die in Fig. 8 dargestellte Verbundplatte 10 zeigt paketweise angebrachte Einkerbungen 22 in unter sich regelmässigem Abstand a. Die gestrichtelt eingezeichneten Einkerbungen 22 sind auf der oberen Deckschicht, die punktiert eingezeichneten Einkerbungen 22 auf der unteren Deckschicht angebracht. Zwischen den Paketen sind keine Einkerbungslinien 22 vorhanden. Aus dieser Anordnung der Einkerbung resultiert eine im wesentlichen Z-förmig gebogene Verbundplatte 10 mit regelmässigem Abrundungsradius.

Eine nicht dargestellte, im wesentlichen U-förmige Gestaltung des Verbundprofils könnte erreicht werden, wenn beide Pakete von Einkerbungen 22 auf der oberen oder auf der unteren Deckschicht angeordnet wären.

Fig. 9 zeigt eine Verbundplatte 10 mit in einem gleichbleibenden Winkel β verlaufenden Einkerbungen 22. Aus dieser Anordnung entsteht eine kegelstumpfförmig gebogene Verbundplatte 10. Die Tiefe der Einkerbungen kann gleichmässig oder in Richtung der zusammenlaufenden Einkerbungen zunehmend sein.

Aus der Anordnung der Einkerbungen 22, weiche beispielsweise in den Fig. 6 - 9 dargestellt sind, ergibt sich, dass durch eine Kombination der Parameter Abstand, Winkel, Tiefe und Querschnittsform von Einkerbungen eine grosse Varianz von Biegungsformen erreichbar ist, ohne dass je eine Lehre gebraucht würde.

## Patentansprüche

1. Verfahren zum Biegen einer ebenen Verbundplatte (10) mit einem elasto-plastisch verformbaren Kern (12) und wenigstens einer einseitig angeordneten Deckschicht (14, 16) aus einem plastisch oder thermoplastisch verformbaren Material,
dadurch gekennzeichnet, dass
wenigstens eine Deckschicht (14, 16) und das darunterliegende Kernmaterial der Verbundplatte (10) auf der Biegungsinnenseite schrittweise geradlinig eingekerbt werden.

2. Verfahren nach Anspruch 1, dadurch gekennzeichnet, dass die Einkerbungen (22) mit einer Tiefe (t) von höchstens 40 %, vorzugsweise 5 - 20 %, der Dicke der Verbundplatte (10) erzeugt werden und sich über die ganze Breite erstrecken.

3. Verfahren nach Anspruch 1 oder 2, dadurch gekennzeichnet, dass zur Herstellung einer mit regelmässigem Radius gebogenen Verbundplatte (10) parallele Einkerbungen (22) in regelmässigem Abstand (a), Tiefe (t) und Querschnittsform erzeugt werden.

4. Verfahren nach Anspruch 1 oder 2, dadurch gekennzeichnet, dass zur Herstellung einer zunehmend gebogenen Verbundplatte (10) parallele Einkerbungen (22) in abnehmendem Abstand (a), zur Herstellung einer abnehmend gebogenen Verbundplatte (10) parallele Einkerbungen (22) in zunehmendem Abstand (a) erzeugt werden, wobei die Tiefe (t) und die Querschnittsform der Einkerbungen (22) jeweils konstant bleiben.

5. Verfahren nach Anspruch 1 oder 2, dadurch gekennzeichnet, dass zur Herstellung einer zunehmend gebogenen Verbundplatte (10) parallele Einkerbungen (22) mit zunehmender Tiefe (t) und gleichmässigem oder abnehmendem Abstand (a), zur Herstellung einer abnehmend gebogenen Verbundplatte (10) parallele Einkerbungen (22) mit abnehmender Tiefe (t) und gleichmässigem oder zunehmendem Abstand (a) erzeugt werden, wobei die Querschnittsform der Einkerbungen (22) konstant bleibt.

6. Verfahren nach Anspruch 4 oder 5, dadurch gekennzeichnet, dass zur Herstellung einer Wellenform einer Verbundplatte (10) mit beidseits angeordneten Deckschichten (14, 16) die Einkerbungen (22) alternierend versetzt auf beiden Deckschichten (14, 16) erzeugt werden.

7. Verfahren nach Anspruch 1 oder 2, dadurch gekennzeichnet, dass zur Herstellung einer kegelstumpfförmig gebogenen Verbundplatte (10) in einem gleichbleibenden, spitzen Winkel (β) verlaufende Einkerbungen (22) mit gleicher Tiefe (t) und Querschnittsform erzeugt werden.

8. Vorrichtung zum Biegen einer ebenen Verbundplatte (10) mit einem elasto-plastisch verformbaren Kern (12) und wenigstens einer einseitig angeordneten Deckschicht (14, 16) aus einem plastisch oder thermoplastisch verformbaren Material, dadurch gekennzeichnet, dass die Vorrichtung aus einem Gerüst mit einer maschinell angetriebenen Prägewalze oder aus einer Presse mit einem balken- oder blattförmigen, auswechselbaren Presswerkzeug (18) besteht, welches manuell oder maschinell, programmiert gesteuert, betätigbar ist.

9. Vorrichtung nach Anspruch 8, dadurch gekennzeichnet, dass die Prägewalze beheizbar oder das Presswerkzeug (18) als Heizschwert ausgebildet ist.

10. Vorrichtung nach Anspruch 8 oder 9, dadurch gekennzeichnet, dass eine automatisierte Presse in bezug auf wenigstens einen Parameter der Gruppe, bestehend aus Presskraft, Vorschub der Verbundplatte (10), horizontaler (β) und vertikaler Winkel des Presswerkzeugs in bezug auf die Verbundplatte (10) und Hub des Presswerkzeugs (18), einstellbar ist.

## Claims

1. Method for bending a flat laminate (10) with an elasto-plastically deformable core (12) and at least one outer layer (14, 16) of a plastically deformable or thermoformable material arranged on one side, characterised in that at least one outer layer (14, 16) and the underlying core material of the laminate (10) are notched stepwise in a straight line on the face that is the inner face after bending.

2. Method according to claim 1, characterised in that the notches (22) are produced with a depth (t) of no more than 40 %, preferably 5 - 20 %, of the thickness of the laminate (10) and extend over the entire width.

3. Method according to claim 1 or claim 2, characterised in that, in order to produce a laminate (10) bent with a regular radius, parallel notches (22) are produced at regular intervals (a), with a regular depth (t) and cross-sectional shape.

4. Method according to claim 1 or claim 2, characterised in that, in order to produce an increasingly bent laminate (10), parallel notches (22) are produced at decreasing intervals (a), and in order to produce a decreasingly bent laminate (10), parallel notches (22) are produced at increasing intervals (a), the depth (t) and the cross-sectional shape of the notches (22) each remaining constant.

5. Method according to claim 1 or claim 2, characterised in that, in order to produce an increasingly bent laminate (10), parallel notches (22) are produced with increasing depth (t) and at regular or decreasing intervals (a), and in order to produce a decreasingly bent laminate (10), parallel notches (22) are produced with decreasing depth (t) and at regular or increasing intervals (a), the cross-sectional shape of the notches (22) remaining constant.

6. Method according to claim 4 or claim 5, characterised in that, in order to produce an undulating laminate (10) with outer layers (14, 16) arranged on both sides, the notches (22) are produced offset in an alternating manner on both outer layers (14, 16).

7. Method according to claim 1 or claim 2, characterised in that, in order to produce a laminate (10) bent in the form of a truncated cone, notches (22) extending at a constant acute angle (β) are produced with a uniform depth (t) and cross-sectional shape.

8. Device for bending a flat laminate (10) with an elasto-plastically deformable core (12) and at least one outer layer (14, 16) of a plastically deformable or thermoformable material arranged on at least one side, characterised in that the device consists of a frame with a machine-driven embossing roll or of a press with an exchangeable bar-shaped or blade-like pressing tool (18) which can be actuated manually or mechanically in a programme-controlled manner.

9. Device according to claim 8, characterised in that the embossing roll can be heated or the pressing tool (18) is designed as a heating bar.

10. Device according to claim 8 or claim 9, characterised in that an automated press is adjustable with respect to at least one parameter of the group consisting of moulding pressure, feed of the laminate (10), horizontal (β) and vertical angle of the pressing tool with respect to the laminate (10) and stroke of the pressing tool (18).

## Revendications

1. Procédé de cintrage d'un panneau sandwich (10) plan comportant une âme (12) élastoplastiquement déformable et au moins une couche externe (14, 16) en un matériau plastiquement ou thermoplastiquement déformable, disposée unilatéralement, caractérisé en ce qu'au moins une couche externe (14, 16) et le matériau de l'âme sous-jacente du panneau sandwich (10) sont entaillés progressivement linéairement du côté interne cintré.

2. Procédé selon la revendication 1, caractérisé en ce que les entailles (22) sont produites à une profondeur (t) représentant au maximum 40 %, de préférence 5 à 20 %, de l'épaisseur du panneau sandwich (10) et s'étendent sur toute la largeur.

3. Procédé selon la revendication 1 ou 2, caractérisé en ce que des entailles parallèles (22) sont produites pour un intervalle (a), une profondeur (t) et une forme de section transversale uniformes en vue de la fabrication d'un panneau sandwich cintré selon un rayon uniforme.

4. Procédé selon la revendication 1 ou 2, caractérisé en ce que des entailles parallèles (22) sont produites à un intervalle (a) décroissant en vue de la production d'un panneau sandwich (10) de plus en plus cintré, que des entailles parallèles (22) sont produites à un intervalle (a) croissant en vue de la fabrication d'un panneau sandwich (10) de moins en moins cintré, la profondeur (t) et la forme de la section transversale des entailles (22) demeurant respectivement constantes.

5. Procédé selon la revendication 1 ou 2, caractérisé en ce que des entailles parallèles (22) de profondeur (t) croissante et d'intervalle (a) uniforme ou décroissant sont produites en vue de la fabrication d'un panneau sandwich (10) de plus en plus cintré, que des entailles parallèles (22) de profondeur (t) décroissante et d'intervalle (a) uniforme ou croissant sont produites en vue de la fabrication d'un panneau sandwich (10) de moins en moins cintré, la forme de la section transversale des entailles (22) demeurant constante.

6. Procédé selon la revendication 4 ou 5, caractérisé en ce que les entailles (22) sont produites en décalage alternatif sur les deux couches externes (14,16) en vue de la fabrication d'une forme ondulée d'un panneau sandwich (10) à couches externes (14,16) disposées bilatéralement.

7. Procédé selon la revendication 1 ou 2, caractérisé en ce que des entailles (22) formant un angle aigu constant (β), de profondeur (t) et de forme de section transversale identiques sont produites en vue de la fabrication d'un panneau sandwich (10) cintré en cône tronqué.

8. Dispositif de cintrage d'un panneau sandwich (10) plan comportant une âme (12) élastoplastiquement déformable et au moins une couche externe (14, 16) en un matériau plastiquement ou thermoplastiquement déformable, disposée unilatéralement, caractérisé en ce que le dispositif se compose d'un cadre comportant un cylindre d'estampage à entraînement mécanique ou d'une presse comportant un outil de compression (18) interchangeable en forme de poutre ou de feuille qui est manoeuvrable manuellement ou mécaniquement ou est commandé de façon programmée.

9. Dispositif selon la revendication 8, caractérisé en ce que le cylindre d'estampage est chauffable ou en ce que l'outil de compression (18) est conçu sous la forme d'une entretoise chauffante.

10. Dispositif selon la revendication 8 ou 9, caractérisé en ce qu'une presse automatisée est réglable en ce qui concerne au moins un paramètre du groupe composé de la force de pression, de l'avance du panneau sandwich (10), de l'angle horizontal (β) et vertical de l'outil de compression en ce qui concerne le panneau sandwich (10) et la course de l'outil de compression (18).
